# EUROPEAN PATENT SPECIFICATION

(11) **EP 4 224 101 B1**
(45) Date of publication and mention of the grant of the patent: **01.10.2025**
(21) Application number: 23154489.1
(22) Date of filing: 01.02.2023
(51) Int. Cl.: F25D 21/02, G01L 13/00, G01L 19/00, F28F 19/00

(54) **DEVICE AND METHOD FOR DETECTING OVERICING OF HEAT EXCHANGER**
VORRICHTUNG UND VERFAHREN ZUR ERKENNUNG DER VEREISUNG EINES WÄRMETAUSCHERS
DISPOSITIF ET MÉTHODE DE DÉTECTION DU GIVRAGE D'UN ÉCHANGEUR THERMIQUE

(30) Priority: 02.02.2022 PL 44028922
(43) Date of publication of application: 09.08.2023
(73) Proprietor: IGLOO Spolka z ograniczona odpowiedzialnoscia, 32-720 Nowy Wisnicz (PL)
(72) Inventor: Wlodarczyk, Milosz, 32-700 Bochnia (PL); Kowacz, Marcin, 32-010 Karniow (PL)
(74) Representative: Hudy, Ludwik

(56) References cited:
- CN-A- 107 192 206
- CN-U- 214 620 264
- JP-U- S5 526 301
- KR-B1- 101 919 410
- US-A- 5 170 635
- US-A1- 2012 260 739
- US-A1- 2020 056 833

## Description

According to the preamble of claim 1, the present invention relates to a device for detecting overicing of heat exchanger of heat machines which monitors in real time the clearance between elements of the heat exchanger of the heat machines, for example an evaporator or condenser, such as heat pumps, air dryers, condensing units and similar machines. The device for detecting works by detecting and determining the degree of throttling of the flow of the medium flowing around the exchanger, for example air, between the elements as well as in channels of the heat exchanger of heat machines which is the result of the appearance of frost or icing due to moisture caused by the presence of water vapour or other impurities in the surroundings of the heat exchanger which precipitate both near the edges and in the depth of the heat exchanger. The device for detecting overicing of the heat exchanger of heat machines works with the heat exchanger elements defrosting system and comprises icing sensors for the heat exchanger elements, located in the space in which the heat exchanger elements are located and around which or between which the flowing medium flows from an inflow side of the flowing medium towards an outflow side of the flowing medium.

In addition, according to the preamble of claim 5, the present invention relates to a method for detecting overicing of heat exchanger by means of device for detecting overicing of a heat exchanger of heat machines cooperating with a defrosting or de-icing system of heat exchanger elements, according to which, when excessive frosting or ice is deposited causing throttling of the flow of the medium flowing through the heat exchanger, for example air, both between the elements as well as in channels of heat exchanger of heat machines, which is indicated by the device for detecting overicing of the heat exchanger of the heat machines, a cycle for removing the frosting or ice from the space between the elements as well as in the channels of the heat exchanger of the heat machine is carried out.

In the current state of the art, several ways of detecting frost or icing are known. The most common detection methods are based on optical sensors which are sensitive to contaminants deposited on their surface over time.

Publication US 2009/0235679 A1 of the application description of the invention provides a method of detecting icing by optical measurement of light intensity together with a gas blowout to prevent contamination of the optical sensor. However, this method introduces unwanted measurement interference. The introduction of a local air blowout at the optical sensor affects the ice formation at this location. Furthermore, this measurement only registers the presence of ice when it appears at the edge of the device. Publication US 7,337,621 B2 of the patent description presents a similar embodiment which differs in that the air blowout has been omitted.

Publication US 4,860,551 B1 of the patent description presents a method for detecting icing using an optical fibre adjacent to the heat exchanger piping. This method makes use of the change in light intensity received by the light receiver when the piping and the optical fibre are covered with ice. The disadvantage of this solution is that it only measures icing at the place where the optical fibre is located, as well as the complicated construction of the device and undoubtedly the high cost of production. Another important issue is the poor detection of icing at the time of its formation.

Publication US 6,467,282 B1 of the patent description discloses a device for detecting icing that uses a measurement of reduction in thermal conductivity and reduction in airflow caused by an appearance of ice. A sensor takes a form of a plate fitted onto a heat exchanger and measures the heat flux between the flowing air and the heat exchanger structure.

Furthermore, publication of US patent application description No. US 2020/056833 A1 titled "Refrigerator and method for controlling refrigerator" provides a method for controlling a refrigerator which comprises a determining step whether or not a defrosting initiation condition is satisfied with respect to an evaporator, a step for detecting a pressure differential by means of one differential pressure sensor for measuring the pressure differential between a first through hole, which is positioned between the evaporator and an inlet port having air flowing in from a storage chamber, and a second through hole which is positioned between the evaporator and a discharge port having air discharged to the storage chamber as well as a defrosting step for variably defrosting in accordance with the measured pressure differential.

Publication of Chinese utility application description No. CN 214 620 264 U titled "Air pressure difference defrosting control device of air cooler" teaches an air cooler air pressure difference defrosting control device which comprises a pressure controller, a cooling machine body and a plurality of cooling pipes. Installation shells are arranged on the two sides of the machine body and flaring holes corresponding to the cooling pipes are formed in the installation shells. According to the mentioned invention pressure detection assemblies are arranged in the installation shells and the air cooler air pressure difference defrosting control device is arranged in the flaring holes. Furthermore, a plurality of pressure-sensitive elements and tensioning wires are arranged on the two sides of the cooling pipe to detect the pressure of different air outlet positions, so that the starting times and the working time of the defrosting system are reasonably controlled by the pressure controller, thereby achieving the purposes of energy conservation and consumption reduction.

In turn, publication of Chinese patent application description No. CN 107 192 206 A titled "Defrosting method for refrigerator" provides a defrosting method for a refrigerator that comprises a steps for judging whether an evaporator needs defrosting and in case when the evaporator needs defrosting, all heating wires are started, thereby emitting heat for defrosting and detecting steps for defrosting temperature and pressure differences between multiple heights of the evaporator through a plurality of pressure difference detection devices and an obtaining step for a plurality of first pressure difference values. According to the defrosting temperature and/or each first pressure difference value, part of or all the heating wires are stopped.

Publication of US patent description No. US 5,170,635 A titled "Defrost for air handling system utilizing direct expansion cooling" describes a system for controlling the operation of an HVAC system which comprises a direct expansion coil, a condenser, a pre-cool coil and a control system that includes a controller and sensors. The controller receives signals indicative of air flow through direct expansion coil from the sensors, compares the received signal to a stored air flow rate and disables the compressor if the stored air flow is equal to or greater than the stored value.

Furthermore, publication of Japanese utility application description No. JP S55 26301 U shows the combination of optical sensors arranged in line across an element of a heat exchanger in combination with a pressure measurement that all allow for extracting the pressure change of the wind tunnel by external force and detecting it as a pressure difference.

Publication of US patent application description No. US 2012/260739 A1 titled "Bidirectional wind pressure detecting apparatus" teaches a bidirectional wind pressure detecting apparatus that comprises a wind pressure sensor configured to turn on/off a switch using an operation plate operated by a wind pressure to measure the wind pressure, and a housing in which the wind pressure sensor is installed. The housing of this apparatus comprises a hollow housing main body, and a first port and a second port formed at one side surface of the hollow housing main body and through which air is introduced and ejected. The wind pressure sensor comprises a first wind pressure sensor and a second wind pressure sensor installed at the first port and the second port, respectively, so that the wind pressure can be measured regardless of a direction of the air introduced into and ejected from the housing.

Additionally, publication of Korean patent description No. KR 1010 919 410 B1 titled "Defrost control system based on sensor hybrid for increasing power efficiency of refrigeration system" shows a defrost control system for improving power efficiency of a refrigeration system that comprises sensors sensing and a control unit for controlling the operation of the refrigeration system. The first sensor of mentioned sensors is an infrared sensor for measuring the infrared ray blocking rate in the refrigeration system wherein the infrared sensor is installed in the first row of the refrigeration system. A pressure sensor of mentioned sensors measures pressure by the system wherein the pressure sensor is installed in the second row of the refrigeration system whereby the controller operates the first sensor data when the first sensor data is out of the first set value or when the second sensor data is out of the second set value.

No one of systems and devices described above teaches assemblies for finding whether sensors are overiced or not, thereby avoiding big energy consumption for unnecessary defrosting.

The aim of the invention is to develop a method and a device for improving detecting overicing of heat exchangers as compared to the current state of the art.

The idea of the invention is a device for detecting overicing of heat exchanger of heat machines communicating with a defrosting system of elements of the heat exchanger controlled by a power supply and control system and comprising icing sensors of elements of the heat exchanger situated in a space in which the elements of the heat exchanger are situated and around which or between which a flowing medium flows, inflowing from an inflow side of the flowing medium towards an outflow side of the flowing medium, whereas the icing sensors of the elements of the heat exchanger of the device for detecting overicing of the heat exchanger of heat machines comprise an inflowing pressure sensor located on the inflow side of the flowing medium inflowing between the elements of the heat exchanger and measuring a pressure on the inflow side and having an output of the inflowing pressure of the flowing medium, an outflowing pressure sensor located on the outflow side of the flowing medium outflowing from between elements of the heat exchanger and measuring a pressure on the outflow side and having an output of the outflowing pressure of the flowing medium, a pressure differential measuring device having a first pressure input communicating with the output of the inflowing pressure sensor giving the value of the inflowing pressure p₁ of the flowing medium and a second pressure input communicating with the output of the outflowing pressure sensor giving the value of the outflowing pressure p₂ of the flowing medium as well as at least one optical receiving sensor and at least one optical emitting sensor, arranged in the same line, whereby the optical emitting sensor generates a stream of light passing through the space between elements of the heat exchanger of the device towards the optical receiving sensor. In addition, the device for detecting overicing of the heat exchanger of the heat machines comprises a processing unit communicating the at least one optical receiving sensor and the at least one optical emitting sensor and with the pressure differential measuring device and calculating a pressure difference Δp between the outflowing pressure p₂ and the inflowing pressure p₁ and calculating an average value Δp_{avg} of the pressure difference, wherein the processing unit is configured to transmit a defrosting signal to the power supply and control system in the case that the average value Δp_{avg} of the pressure difference is greater than an upper permissible value of the pressure difference Δpₛₚ to start the defrosting process until the average value Δp_{avg} of the pressure difference is lower than the preset lower value of the pressure difference Δpₛₚ, whereby in a housing (171) of the laser sensor (215, 216) at a front side (177) of the laser sensor (215, 216) there is an internal heater (17) behind which, looking from the front side (177), there is a sensor element (172) measuring a value of intensity E of light and communicating with the power supply and control system (40).

In addition, the optical receiving sensor and the optical emitting sensor are integrated with the pressure sensors and form compact sensors, wherein the optical receiving sensor and the optical emitting sensor are integratable with the pressure sensors interchangeably on both sides of the heat exchanger, looking in the flow direction of the flowing medium.

According to the idea of the invention, it is advisable that the exchanger or exchangers that comprise the icing sensors are at least one selected from among a lamellar heat exchanger, a tubular heat exchanger or a microchannel heat exchanger or combinations thereof.

In a housing of the pressure sensor at a front side of the pressure sensor there is an internal heater behind which, looking from the front side, there is a sensor element measuring the pressure force of the medium proportional to a linear velocity v₁, v₂ of the medium flowing around the pressure sensor and communicating with the power supply and control system.

The idea of the invention is also a method for detecting overicing of heat exchanger by means of device and detecting overicing of the heat exchanger of heat machines and communicating with a defrosting system of elements of the heat exchanger by the power supply and control system and comprising icing sensors of elements of the heat exchanger located in a space in which the elements of the heat exchanger are located and around which or between which a flowing medium flows, inflowing from an inflow side of the flowing medium towards an outflow side of the flowing medium, whereas a pressure p₁ is periodically measured by means of an inflowing pressure sensor located on the inflow side of the flowing medium inflowing through the space between the elements of the heat exchanger and a pressure p₂ by means of an outflowing pressure sensor located on the outflow side of the flowing medium outflowing from the space between elements of the heat exchanger and then a pressure difference Δp between the pressure p₂ and the pressure p₁ is calculated and, if an average value Δp_{avg} of pressure difference is greater than a permissible value of pressure difference, a defrosting process is started when the heat machine operates which is carried out until the average value of the pressure difference Δp_{avg} is lower than a preset lower value of the pressure difference Δpₛₚ and, after finding that the average value Δp_{avg} of the pressure difference is lower than the preset lower value of the pressure difference Δpₛₚ, timers are reset and a measurement of elapsed time begins after the heat machine has been switched back to a standard operation mode of the heat machine whereby before providing measurements of the pressure p₁ by means of the inflowing pressure sensor located on the inflow side of the flowing medium inflowing between the elements of the heat exchanger and the pressure p₂ by means of the outflowing pressure sensor located on the outflow side of the flowing medium outflowing from the space between elements of the heat exchanger is checked whether the pressure sensors and/or the laser sensors are frosted or overiced and after finding that the tested pressure sensor and/or the laser sensors are frosted or icy and after confirming that the pressure sensor and/or laser sensor being checked is frosted or icy, their defrosting process is started.

Preferably, the pressure sensors are cyclically defrosted.

The main application of the device is intended to be in the heat exchangers of industrial heat machines where the sensors used so far are not optimal. The heat machines have long and wide exchangers, for which the measuring range for overicing detection must be considerable, reaching up to several tens of centimeters. The process of ice formation can start shallow at an edge of the exchanger or deep in a plane of its symmetry. The differential pressure measurement method is virtually independent of where the flow is stifled.

The device measures the occurrence of frosting heat exchanger by means of connecting several sensors together using different measurement methods. The developed invention uses optoelectronic sensors and electronic differential pressure sensors which, on the basis of an increase in the difference of the tested physical quantities, such as pressure, light intensity, over standard quantities, indicate the appearance of overicing. The accumulation of water molecules, its freezing between heat exchanger plates, microchannels, and exchanger tubes, significantly restricts the flow of flowing medium, for example air, generated by fans. Frosted exchanger is less efficient and defrosting takes a long time which is undesirable. The invention makes it possible to predict overicing in flow channels of the flowing medium flow, thereby giving feedback by means of control systems of the heat machine which then initiates the defrosting or de-icing process.

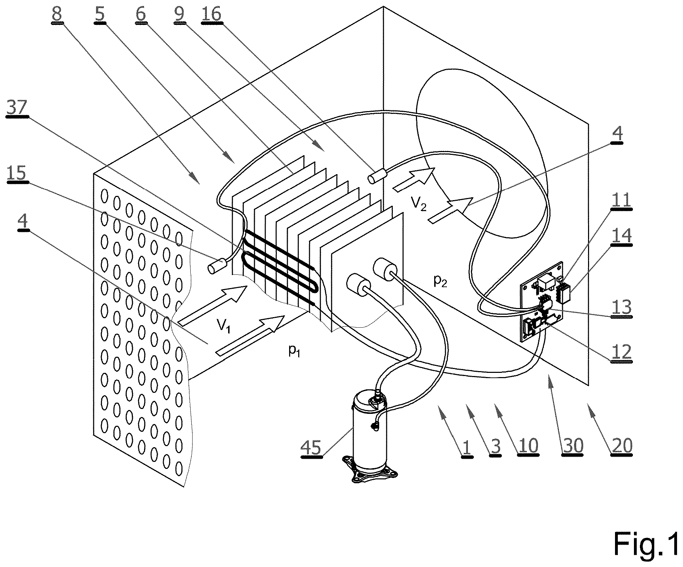

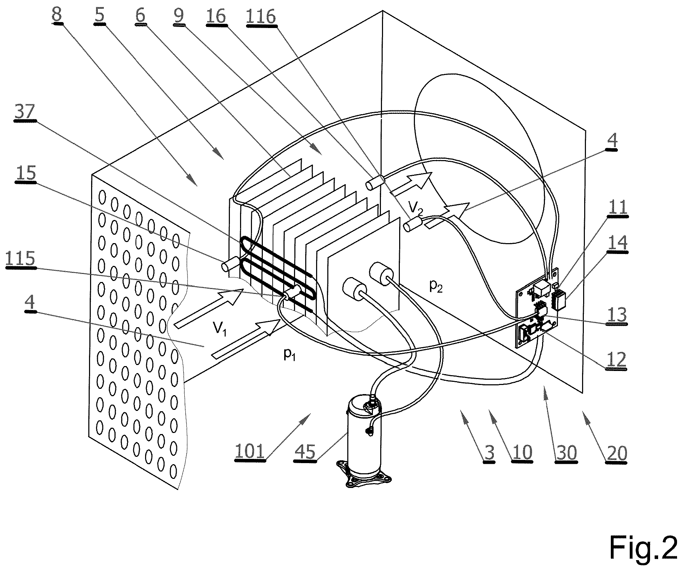

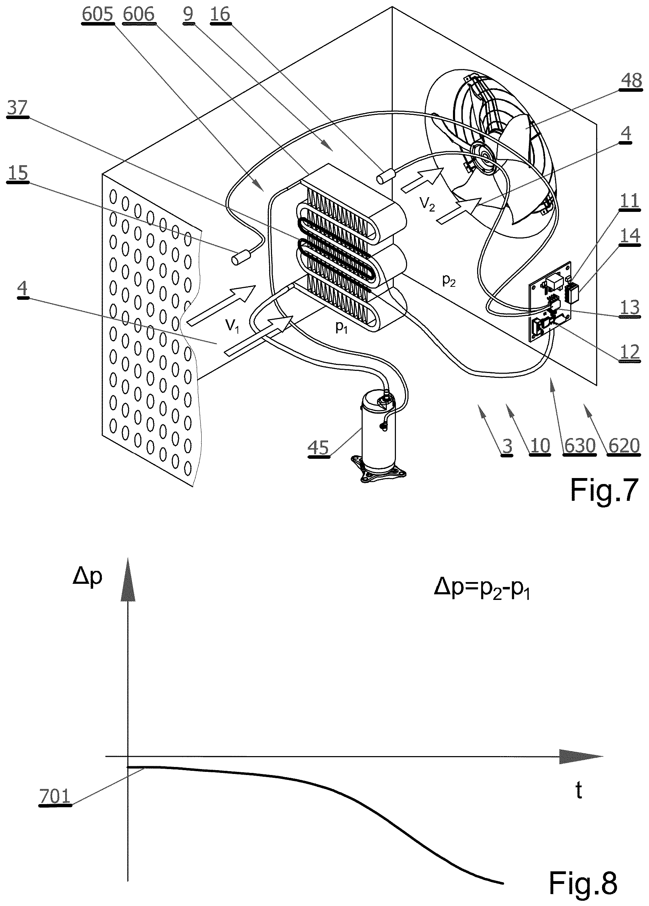

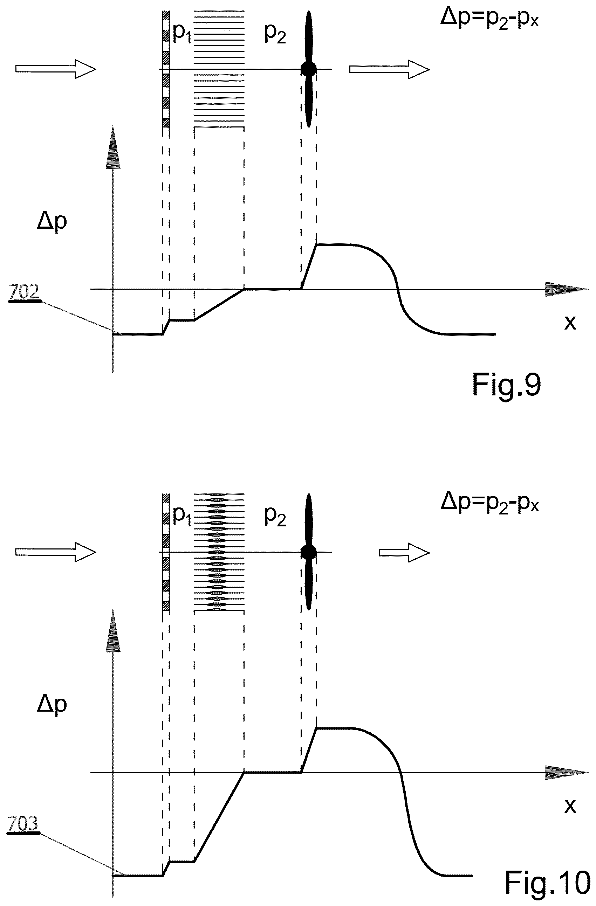

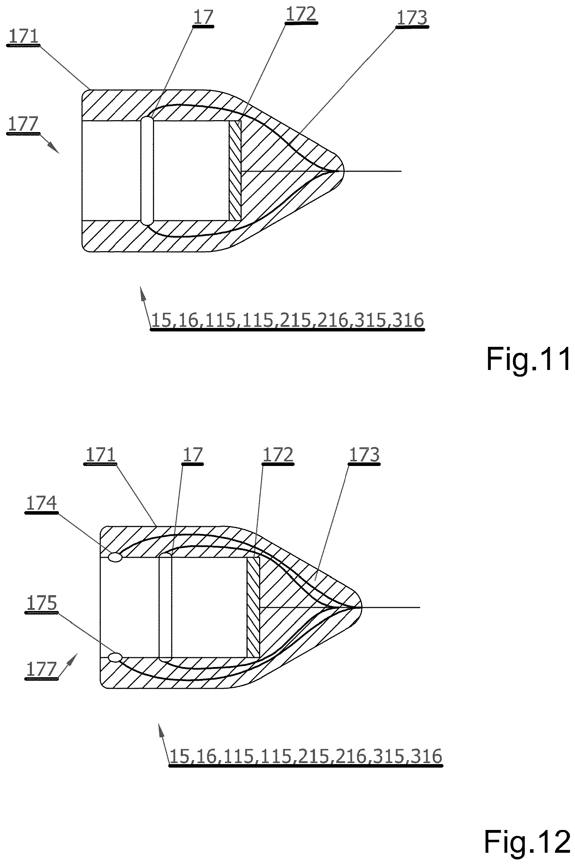

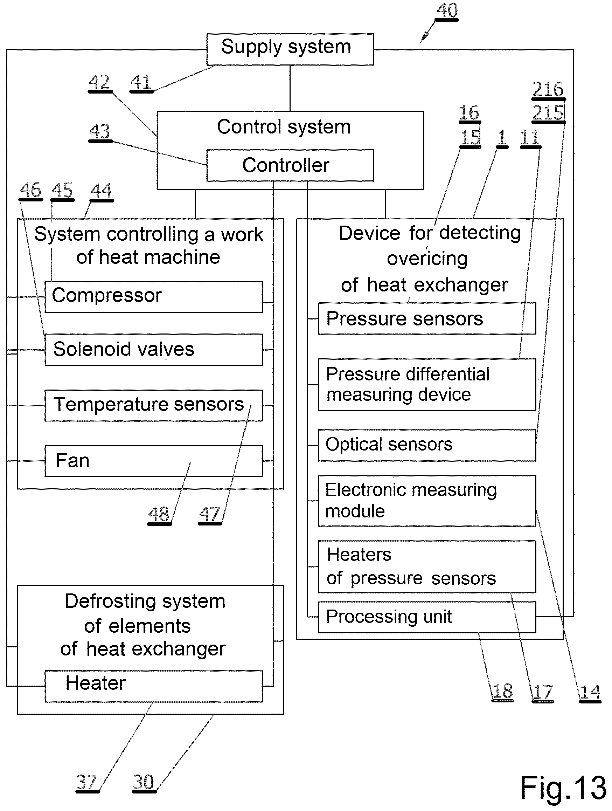

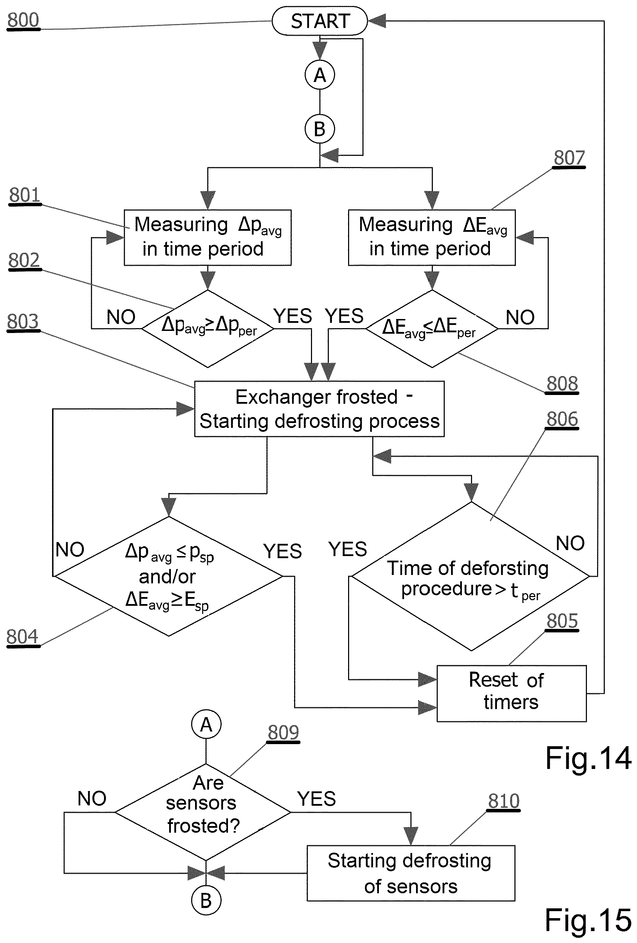

The subject of the invention is shown in embodiments in drawings, where Fig. 1 shows a device for detecting overicing of heat exchanger of heat machine in its simplest version, Figs. 2, 3, 4, 5, 6, and 7 show other embodiments of a device for detecting overicing of heat exchanger of heat machine, Fig. 8 shows a course of pressure difference as a function of time with increasing overicing of heat exchanger, for example an evaporator, Fig. 9 shows a change in pressure difference during operation of heat machine depending on pressure measuring points of defrosted heat exchanger, Fig. 10 shows a change in pressure difference during the operation of the heat machine depending on pressure measuring points of a frosted or overiced heat exchanger, Figs. 11 and 12 show a longitudinal section of a pressure sensor and/or a laser sensor with a heater, Fig. 13 shows a block diagram of a power supply and control system of a heat machine with a device for detecting overicing of heat exchanger of heat machines with a defrosting system of elements of the heat exchanger, Fig. 14 shows a block diagram of an algorithm for detecting overicing of heat exchanger and Fig. 15 shows alternative steps for detecting overicing and defrosting of pressure sensor and/or laser sensor. Fig. 1, 2 and 5 show examples which are not part of the present invention.

In an example which is not part of the present invention, a device 1 for detecting overicing of heat exchanger 5 of heat machine 20 with a defrosting system 30 of elements 6 of the heat exchanger 5, shown in Fig. 1, in its simplest embodiment comprises a differential pressure measuring device 11 with a first pressure input 12 and a second pressure input 13, and cooperating with it, an inflowing pressure sensor 15 located at an inflow side 8 of flowing medium 4, flowing around the exchanger and inflowing between the elements 6 of the heat exchanger 5 with a linear velocity v₁ and measuring pressure p₁ at the inflow side 8, and connected to the first pressure input 12 of the differential pressure measuring device 11, and an outflowing pressure sensor 16 located at an outflow side 9 of the flowing medium 4, flowing around the exchanger and outflowing from between the elements 6 of the heat exchanger 5 with a linear velocity v₂ and measuring pressure p₂ at the outflow side 9, and connected to the second pressure input 13 of the differential pressure measuring device 11, measuring a pressure difference Δp between pressure p₂ at the second pressure input 13 and the pressure p₁ at the first pressure input 12 of the differential pressure measuring device 11. The inflowing pressure sensor 15 and the outflowing pressure sensor 16 are directed with their face oppositely directed to the inflowing medium and communicate with the differential pressure measuring device 11 and with an electronic measuring module 14. In other embodiments, the inflowing pressure sensor 15 and an outflowing pressure sensor 16 are directed with their face opposite to the inflowing medium, and in yet another case they are directed in different directions. The differential pressure measuring device 11 communicates in one embodiment by means of electrical connections with a defrosting system 30 of the elements 6 of the heat exchanger with a heater 37 and in another embodiment by means of a receiver-transmitter system. The defrosting system 30 of the elements 6 of the heat exchanger is powered and controlled by a power supply and control system 40 shown schematically in Fig. 13. Icing sensors 10 of the elements 6 of the heat exchanger 5 are situated in a space 3, for example in a chamber which has openings enabling a flow of cooling medium, as is known from the state of the art, and which is placed in a housing of the heat machines, and in which the elements 6 of the heat exchanger 5 are situated and around which or between which the cooling medium 4 flows, flowing around the exchanger, inflowing to the inflow side 8 of the flowing medium 4 towards the outflow side 9 of the flowing medium. In the embodiment shown in Fig. 1, the heat exchanger 5 is a lamellar heat exchanger, elements of which are plates, and the flow of the medium flowing around its elements 6 or between them and the circulation of the flowing medium 4 flowing around the exchanger is independent, that means it is forced in a natural way, for example by the difference in gravity of the medium flowing on both sides of the heat exchanger 5, looking in the flow direction of the flowing medium 4 flowing around the exchanger. In Fig. 1, the flowing medium from the surroundings of the heat machine enters through the perforated cover, flows between the elements of the heat exchanger and then flows out through the outlet to the outside of the device, it means to the outside of the heat machine. Figs. 2, 3, 4, 5, 6, and 7 show other embodiments of a device for detecting overicing of heat exchanger of heat machines with a defrosting system of elements of the heat exchanger. And so, in an example which is not part of the present invention, Fig. 2 shows a device 101 for detecting overicing of the heat exchanger 5 of heat machines 20 with the defrosting system 30 of elements 6 of the heat exchanger 5 which differs from the embodiment shown in Fig. 1 in that it has more than one inflowing pressure sensor and more than one outflowing pressure sensor, for example, it has two inflowing pressure sensors 15 and 115 and two outflowing pressure sensors 16 and 116. In other embodiments, there may even be a greater number of inflowing pressure sensors and outflowing pressure sensors and their number and placement usually depend on the complexity of the design of heat exchanger of the heat machines and the reliability requirements for the defrosting system of elements of the heat exchanger.

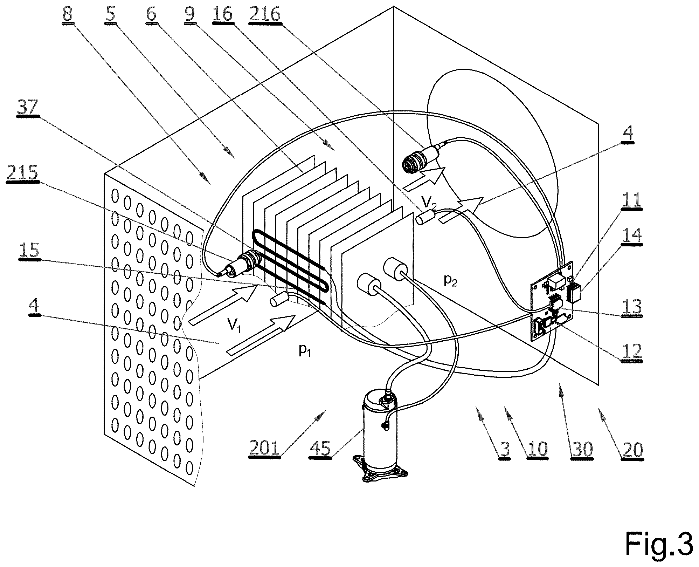

In turn, Fig. 3 shows a device 201 according to the present invention for detecting overicing of the heat exchanger 5 of the heat machines 20 with the defrosting system 30 of the elements 6 of the heat exchanger 5 which differs from the embodiment shown in Fig. 1 in that apart from the inflowing pressure sensor 15 and the outflowing pressure sensor 16, it has additional laser sensors 215, 216, which transmit signals depending on the intensity of light received by the optical receiving sensor 215 and emitted by the optical emitting sensor 216, generating a stream of light in the direction of the optical receiving sensor 215, whereby the optical receiving sensor 215 and the optical emitting sensor 216 are arranged in the same line and the stream of light emitted by the optical emitting sensor 216 passes between the elements 6 of the heat exchanger 5 of the device 201.

The optical receiving sensor 215 and the optical emitting sensor 216 may be interchangeably installed on the sides of the heat exchanger 5 of the heat machines 20. The aforementioned light intensity value received by the optical receiving sensor 215 will decrease in proportion to the degree of frosting and/or overicing of the heat exchanger elements. The inflowing pressure sensor 15 and the outflowing pressure sensor 16 communicate with the pressure differential measuring device 11 and with the electronic measuring module 14, and the optical receiving sensor 215 and the optical emitting sensor 216 communicate with a processing unit 18 shown in Fig. 13 which calculates the pressure and light intensity settings for the defrosting system of the elements of the heat exchanger on the basis of pressure sensors and optical sensors.

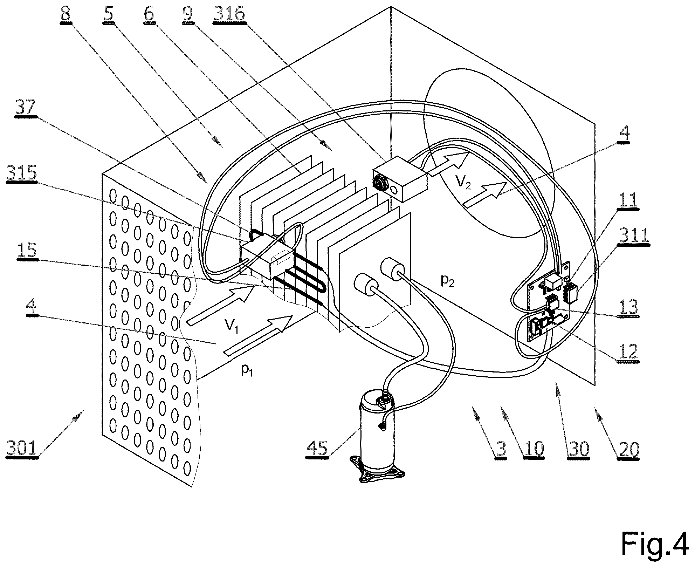

Fig. 4 shows a device 301 for detecting overicing of the heat exchanger 5 of the heat machines 20 with the defrosting system 30 of the elements 6 of the heat exchanger 5 which has compact sensors 315, 316 which communicate with the pressure differential measuring device 11 and with a processing unit 311 shown in Fig. 13 as the calculating unit 18 which calculates the settings for the defrosting system of the elements of the heat exchanger on the basis of indications of optical sensors. The compact inflowing pressure sensor 315 has an additional built-in optical receiving sensor, so it acts as the inflowing pressure sensor 15 and the optical receiving sensor 215, and the compact outflowing pressure sensor 316 has an additional built-in optical emitting sensor, so it acts as the outflowing pressure sensor 16 and the optical emitting sensor 216. The optical receiving sensor 215 and the optical emitting sensor 216 in another embodiment are integrated with the inflowing pressure sensor 15 and the outflowing pressure sensor 16 which means that the optical sensors are universal sensors and can be mounted interchangeably in both compact sensors 315, 316.

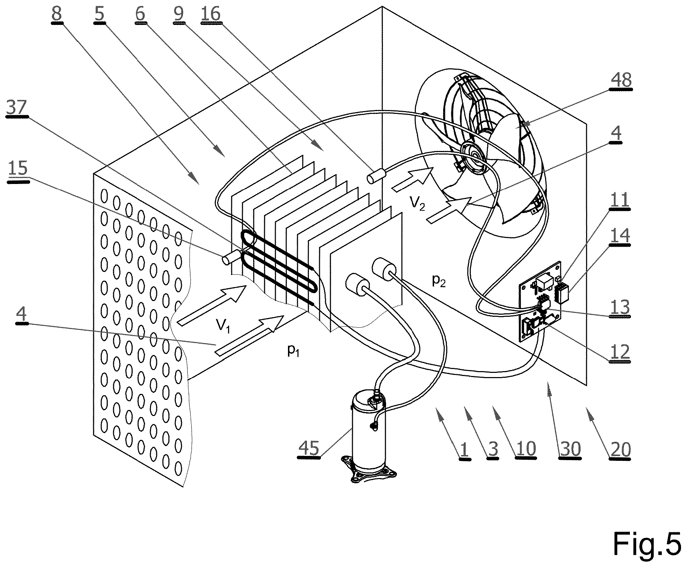

In an example which is not part of the present invention, Fig. 5 shows the device 1 for detecting overicing of the heat exchanger 5 of the heat machines 20 with the defrosting system 30 of the elements 6 of the heat exchanger 5 which is the same as the device for detecting overicing of the heat exchanger of the heat machines shown in Fig. 1.

The difference between both embodiments is that in Fig. 1 the flow of the flowing medium 4 flowing around the heat exchanger and outflowing from between the elements 6 of the heat exchanger 5 occurs naturally, for example the flow is caused by the difference in gravity of the flowing medium on both sides of the heat exchanger 5 looking in the direction of the flow of the flowing medium 4 flowing around the exchanger, while in Fig. 5 the flow of the flowing medium 4 flowing around the exchanger, outflowing from between the elements 6 of the heat exchanger 5 is forced by a ventilating device 48, for example a fan or a blower.

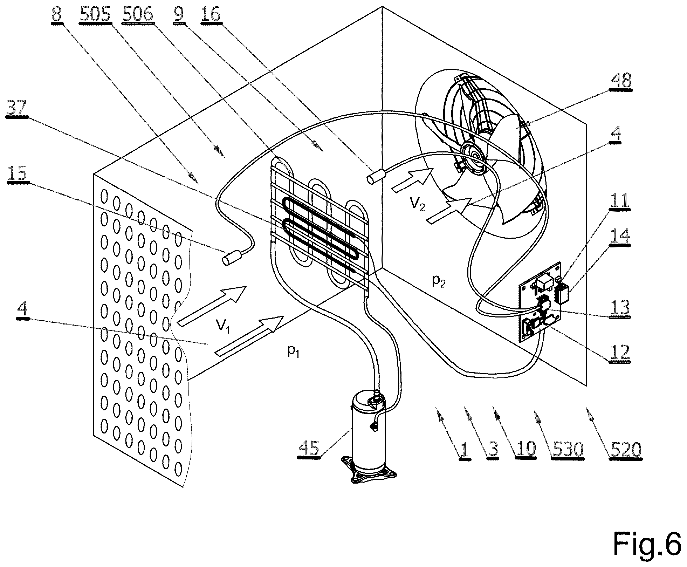

Fig. 6 shows the device 1 for detecting overicing of heat exchanger 505 of heat machines 520 with a defrosting system 530 of elements 506 of heat exchanger 505 which is the same as the device for detecting overicing of the heat exchanger of the heat machines shown in Figs. 1 and 5. The embodiment of Fig. 6 differs in that in Figs. 1 and 5 the heat exchanger 5 is the lamellar heat exchanger cooling elements of which are plates, while the heat exchanger 505 of Fig. 6 is a tubular exchanger. A cooling medium in this exchanger flows through tubes to which flat bars or rods are attached to increase the cooling surface.

The embodiments shown in Fig. 7 and in Figs. 1 and 5 show a similar difference. The device 1 for detecting overicing of heat exchanger 605 of heat machines 620 with a defrosting system 630 of elements 606 of heat exchanger 605 presented in Fig. 7 is the same as the device for detecting overicing of the heat exchanger of the heat machines shown in Figs. 1 and 5. The embodiment of Fig. 7 differs in that in Figs. 1 and 5 the heat exchanger 5 is the lamellar heat exchanger cooling elements of which are plates while the heat exchanger 605 of Fig. 7 is a microchannel heat exchanger with a waved arrangement parallel elements of which are connected by plates to increase the cooling surface.

Although the embodiments shown in Figs. 5, 6, and 7 have the same device 1 for detecting overicing of the heat exchanger 405, 505, 605, respectively, of the heat machines 420, 520, 620, respectively, and a forced cooling system, in other embodiments, devices for detecting overicing of their heat exchanger may be the devices 101, 201, 301 for detecting overicing shown in Figs. 2, 3, and 4. Due to the very similar construction of the heat machines in which the invention can be applied, the figures can be regarded as an embodiment used either in a heat pump, condensing unit or air dryer. The described figures show the location of the sensors on both sides of the heat exchanger, regardless of its type or function.

In one embodiment, the device for detecting overicing of the exchanger is similar to a barometer having two pressure feeders fed via tubes to the required measuring points. In the case of undisturbed flow, the value of the pressure difference Δp = p₂-p₁ is small, as shown in Fig. 8, which shows the change in pressure difference during operation of the heat machine, referring to the measurement points of pressure p₁ and pressure p₂ at the sensor locations, wherein it refers to the lamellar heat exchanger. The pressure difference Δp shown in the diagram as a function of operation time of the heat machine with the lamellar heat exchanger is based on actual measurements but the course 701 of the pressure value change is similar to other heat exchanger types. During the initial phase of the heat machine operation, just after defrosting, the overicing of the heat exchanger is very slow. In the second phase, the overicing process is accelerated and then slowed down again when the heat exchanger is already mostly frosted or iced. As water molecules settle on the exchanger with the designs described above, this flow is stifled and a higher pressure difference appears which is recorded in real time. In the case of a pair of optical sensors, the situation is analogous, except that the value of the intensity of light received by the optical receiving sensor and emitted by the optical emitting sensor is measured. When a threshold value of the measured parameters is exceeded, for example the maximum permitted pressure difference Δp predetermined by measurements during operation of a given heat machine or the minimum light intensity predetermined by measurements during operation of a given heat machine, the defrosting process is activated. The defrosting process is carried out by switching the operating state of the heat machine by the device 1 for detecting overicing of the heat exchanger. In the embodiment shown in Figs. 1-7, this process consists in switching on by the defrosting system 30, 530, 630 the power supply to the heater 37 located in the vicinity of elements 6, 506, 606 of the exchangers 5, 505, 605, respectively. In another embodiment, depending on the function of the heat machine, the defrosting process can be initiated by shifting solenoid valves that change the flow direction of the flowing medium flow inside the exchanger. The reverse flow causes a compressor 45 to force a heated medium, for example heated cooling medium, into the heat exchanger 5, 505 or 605, which then transfers heat to the exchanger to melt the ice particles accumulated on the elements 6, 506, and 606.

Figs. 9 and 10 show the dependence 702 and 703 of the pressure difference on the value x, expressed by the formula Δp = p₂ - pₓ, where x is the distance from the zero point in accordance with the flow direction of the flowing medium, either flowing spontaneously or forced by the fan. Fig. 9 refers to the operation of the heat exchanger just after defrosting. Fig. 10 refers to the operation of the heat exchanger in the advanced frost stage and shows the pressure drop across this heat exchanger of the heat machine which is significantly greater than with the heat exchanger without frost, as shown in Fig. 9. In both cases, as follows from the presented dependencies 702, 703, the pressure drop occurs at the perforated cover and at the fan, however, it has no significance because the measurement of pressure p₁ takes place upstream of the heat exchanger behind the perforated cover and the measurement of pressure p₂ downstream of the heat exchanger in front of the fan.

The presented solutions are based on new measurement methods, previously unused, which allow a more precise determination of the moment of exceeding the permissible overicing. In addition, the sensors can be multiple in different places of the heat exchanger, as mentioned above, which improves the process of detecting overicing. The use of sensors in many places of the heat exchanger can be of particular importance in the complex constructions of the lamellar exchangers, in which the overicing process often runs unevenly on its individual sections. Also to prevent clogging and/or overicing the pressure sensors 15, 16, 115, 116, 315, 316 and/or the laser sensors 215, 216, the tubes connecting the sensor with the measuring point can be heated with heaters located at the pressure sensors 15, 16, 115, 116, 315, 316 or inside their housing, as shown in detail in Figs. 11 and 12.

Thus, Fig. 11 shows the pressure sensor 15, 16, 115, 116, 315, 316 and/or the laser sensor 215, 216 in housing 171 of which at a front side 177 an internal heater 17 is arranged, for example in the shape of a ring. Inside the housing 171 a sensor element 172 is placed which in the case of the pressure sensor 15, 16, 115, 116, 315, 316 measures a thrust force of the medium 4 on the sensor element 172 proportional to the linear velocity v₁, v₂ of the medium flowing over the sensor or a value of intensity E of light in the case of the sensor element of the optical receiving sensor. The sensor element 172 communicates with the power supply and control system 40 through transmitters or by means of electric wires 173.

Fig. 12 shows the pressure sensor 15, 16, 115, 116, 315, 316 and/or the laser sensor 215, 216 similar to the sensor shown in Fig. 11 except that the pressure sensor 15, 16, 115, 116, 315, 316 and/or the laser sensor 215, 216 shown in Fig. 12 additionally has a laser emitting element 174 and a laser receiving element 175 by means of which the degree of frosting and overicing of the pressure sensor 15, 16, 115, 116, 315, 316 and/or of the laser sensor 215, 216 is determined.

In one embodiment, the pressure sensors 15, 16, 115, 116, 315, 316 and/or the laser sensors 215, 216 are cyclically defrosted by connecting them cyclically to the power supply for an empirically determined period. According to the present invention, before carrying out the measurement of the pressure p₁, p₂, it is checked whether the pressure sensors 15, 16, 115, 116, 315, 316 and/or the laser sensors 215, 216 are frosted or icy and after confirming that the pressure sensor 15, 16, 115, 116, 315, 316 and/or laser sensor 215, 216 being checked is frosted or icy, their defrosting process is starting. Defrosting of the pressure sensors 15, 16, 115, 116, 315, 316 and/or the laser sensors 215, 216 is advantageous because the frosted and/or icy pressure sensors 15, 16, 115, 116, 315, 316 and/or laser sensors 215, 216 could trigger a premature defrosting process of the heat exchanger of the heat machines due to inadequate for a given state measurements of the linear velocity v₁, v₂ of the medium flowing around the sensor or the value of intensity E of light.

Fig. 13 shows a block diagram of an electrical system comprising such basic systems as the power supply and control system 40 of the heat machine and the device 1 for detecting overicing of the heat exchanger of the heat machines with the defrosting system 30 of the elements of the heat exchanger equipped with the heater 37. Most of the elements and systems are presented in the descriptions of the preceding figures and the reference numerals referring to the described elements and arrangements of the preceding figures are the same as those given in Fig. 13.

The power supply and control system 40 of Fig. 13 of the heat machine comprises a power supply system 41, a control system 42 with a controller 43, a system 44 controlling the operation of the heat machine and the elements belonging to it, in particular the compressor 45, solenoid valves 46, temperature sensors 47 and the fan 48. Fig. 13 also schematically shows the defrosting system 30 of the elements of the heat exchanger with the heater 37 and the device 1 for detecting overicing of the heat exchanger comprising the pressure sensors 15, 16, 115, 116, 315, 316, the pressure differential measuring device 11, the optical sensors 215 and 216, the electronic measuring module 14, heaters 17 of the pressure sensors and the processing unit 18.

Fig. 14 shows a block diagram of an algorithm for detecting overicing of the heat exchanger, according to which, after starting in step 800, in one embodiment, an average value Δp_{avg} of pressure difference is measured in step 801. In one embodiment the measurement is taken every 1 minute and in another embodiment the measurement is taken every 10 minutes, preferably every 3 minutes. As soon as in step 802 it is found that the average value Δp_{avg} of the pressure difference is greater than a permissible value of the pressure difference Δpₛₚ determined experimentally for a given heat machine which indicates frosting or overicing of the heat exchanger of the heat machine, a defrosting process in a defrosting mode of the heat machine is started in step 803 which is carried out until the average value Δp_{avg} of the pressure difference is lower than a preset lower value of the pressure difference Δpₛₚ, determined experimentally depending on the construction of the heat machine and its heat exchanger which is checked in step 804.

After finding that the average value Δp_{avg} of the pressure difference is lower than the preset lower value of the pressure difference Δpₛₚ which indicates the end of the defrosting process, timers are reset in step 805 and a measurement of elapsed time begins after the heat machine has been switched back to a standard operation mode. Optionally, resetting of the timers takes place after a predetermined time tₚₑᵣ of the defrosting procedure has elapsed which is measured in step 806.

In embodiments where the device for detecting overicing of the heat exchanger of the heat machines has optical sensors or compact sensors, in addition to an inflowing pressure sensor and an outflowing pressure sensor and a pressure differential measuring device, an average value ΔE_{avg} of light intensity difference calculated on the basis of readings from the optical emitting sensor and the optical receiving sensor is measured in step 807 and after determining in step 808 that the average value ΔE_{avg} of the light intensity difference is lower than the allowable value ΔEₚₑᵣ of the light intensity difference, indicating frosting or overicing of the heat exchanger of the heat machine, the defrosting process in the defrosting mode of the heat machine is started in step 803.

In Fig. 15 are shown additional alternative steps 809, 810 of an algorithm for detecting overicing of the heat exchanger, according to which, after starting in step 800, in another embodiment, before measuring the average value of the pressure difference Δp_{avg} and/or the average value ΔE_{avg} of the light intensity difference, in step 809 is determined the degree of frosting or overicing of the pressure sensor 15, 16, 115, 116, 315, 316 or the laser sensor 215, 216 and upon detecting frosting or overicing of said sensor based on a signal generated by the laser receiving element 175, in step 810 starts the process of defrosting the sensor by means of the heat generated by the internal heater 17.

Through the use of the internal heaters 17, detecting overicing and removing from the pressure sensors 15, 16, 115, 116, 315, 316 and/or laser sensors 215, 216 is performed, thereby distortion of the measurements and calculations of the average value Δp_{avg}, ΔE_{avg} of the pressure difference and/or the light intensity difference is avoided.

In the case that the pressure sensor 15, 16, 115, 116, 315, 316 or the laser sensor 215, 216 does not have the laser emitting element 174 and the laser receiving element 175, the process of defrosting the sensor by means of the heat generated by the internal heater 17 is carried out cyclically at time intervals determined experimentally.

The calculation of the average valuesΔp_{avg}, ΔE_{avg} of both the light intensity difference and the pressure difference on the basis of the measured quantities is known from the state of the art and will not be described here.

The new developed method uses the measurement of the pressure difference on both sides of the heat exchanger as a quantity that varies smoothly and proportionally to the amount of overicing. Continuous measurement allows optimal fine-tuning of the controller responsible for controlling the exchanger defrost mode, even in the early phase of overicing formation, and thus contributes to better efficiency performance of the unit. The integration of the pressure sensor with the optical sensor in the developed embodiment not only has the advantage of a redundant system for detecting overicing and the presence of foreign bodies but also serves to assess whether the defrosting process has been fully completed. Measuring the pressure on two sides of the heat exchanger uses the flow generated by the fan during operation of the device. Depending on the load of the device, the rotational speed of the fan, the measured pressure difference and the rate of its changes can be used to better analysis and prediction of the creation of an undesirable phenomenon.

## Claims

1. A device (1) for detecting overicing of a heat exchanger (5, 505, 605) of heat machines (20, 520, 620) communicating with a defrosting system (30, 530, 630) of elements of the heat exchanger (5, 505, 605) controlled by a power supply and control system (40), the device (1) comprising
icing sensors (10) of elements (6) of the heat exchanger (5, 505, 605) situated in a space (3), in which the elements (6) of the heat exchanger (5, 505, 605) are situated and around which, or between which, a flowing medium (4) flows, inflowing from an inflow side (8) of the flowing medium (4) towards an outflow side (9) of the flowing medium (4), whereas the icing sensors (10) comprise an inflowing pressure sensor (15, 115, 315) located on the inflow side (8) of the flowing medium (4) inflowing between the elements (6) of the heat exchanger (5, 505, 605) and measuring a pressure on the inflow side (8) and having an output of the inflowing pressure of the flowing medium (4),
an outflowing pressure sensor (16, 116, 316) located on the outflow side (9) of the flowing medium (4) outflowing from between elements (6) of the heat exchanger (5, 505, 605) and measuring a pressure on the outflow side (9) and having an output of the outflowing pressure of the flowing medium (4),
a pressure differential measuring device (11) having
a first pressure input (12) communicating with the output of the inflowing pressure sensor (15, 115, 315) giving the value of the inflowing pressure (p₁) of the flowing medium (4), and
a second pressure input (13) communicating with the output of the outflowing pressure sensor (16, 116, 316) giving the value of the outflowing pressure (p₂) of the flowing medium (4)
a processing unit (18) communicating with the pressure differential measuring device (11) and calculating a pressure difference (Δp) between the outflowing pressure (p₂) and the inflowing pressure (p₁) and calculating an average value (Δp_{avg}) of the pressure difference, wherein the processing unit (18) is configured to transmit a defrosting signal to the power supply and control system (40) in the case that the average value (Δp_{avg}) of the pressure difference is greater than an upper permissible value of the pressure difference (Δpₛₚ) to start the defrosting process until the average value (Δp_{avg}) of the pressure difference is lower than the preset lower value of the pressure difference (Δpₛₚ), **characterised by**
at least one optical receiving sensor (215) and at least one optical emitting sensor (216), arranged in the same line, whereby the optical emitting sensor (216) generates a stream of light passing through the space between elements (6) of the heat exchanger (5, 505, 605) of the device (1) towards the optical receiving sensor (215),
wherein the processing unit (18) further communicates with the at least one optical receiving sensor (215) and the at least one optical emitting sensor (216), wherein the at least one optical receiving sensor (215) and at least one optical emitting sensor (216) are laser sensors, in a housing (171) of at least one of the laser sensors (215, 216) at a front side (177) of the laser sensor (215, 216) there is an internal heater (17) behind which, looking from the front side (177), there is a sensor element (172) measuring a value of intensity E of light and communicating with the power supply and control system (40).

2. The device (1) for detecting overicing of the heat exchanger (5, 505, 605) of the heat machines (20, 520, 620) according to claim 1, **characterised in that** the optical receiving sensor (215) and the optical emitting sensor (216) are integrated with the pressure sensors (15, 16) and form compact sensors (315, 316), wherein the optical receiving sensor (215) and the optical emitting sensor (216) are integratable with the pressure sensors (15, 16) interchangeably on both sides of the heat exchanger, looking in the flow direction of the flowing medium (4).

3. The device (1) for detecting overicing of the heat exchanger (5, 505, 605) of the heat machines (20, 520, 620) according to claim 1 or 2, **characterised in that** the heat exchanger or heat exchangers are at least one selected from among a lamellar heat exchanger (5, 505, 605), a tubular heat exchanger (505) or a microchannel heat exchanger (605) or combinations thereof.

4. The device (1) for detecting overicing of the heat exchanger (5, 505, 605) of the heat machines (20, 520, 620) according to one of claims 1 to 3, **characterised in that** in a housing (171) of the pressure sensor (15, 16, 115, 116, 315, 316) at a front side (177) of the pressure sensor (15, 16, 115, 116, 315, 316) there is an internal heater (17) behind which, looking from the front side (177), there is a sensor element (172) measuring the pressure force of the medium (4) proportional to a linear velocity (v₁, v₂) of the medium flowing around the pressure sensor (15, 16, 115, 116, 315, 316) and communicating with the power supply and control system (40).

5. A method for detecting overicing of heat exchanger of heat machines (20, 520, 620) by means of device (1) according to claim 1 to 4 and communicating with a defrosting system (30, 320, 320) of elements of the heat exchanger (5, 505, 605) by the power supply and control system (40) wherein after finding that the average value (Δp_{avg}) of the pressure difference is lower than the preset lower value of the pressure difference (Δpₛₚ), timers are reset and a measurement of elapsed time begins after the heat machine has been switched back to a standard operation mode of the heat machine, **characterised in that** before providing measurements of the pressure (p₁) by means of the inflowing pressure sensor (15, 115, 315) located on the inflow side (8) of the flowing medium (4) inflowing between the elements (6) of the heat exchanger (5, 505, 605) and the pressure (p₂) by means of the outflowing pressure sensor (16, 116, 316) located on the outflow side (9) of the flowing medium (4) outflowing from the space between elements (6) of the heat exchanger (5, 505, 605) is checked whether the pressure sensors (15, 16, 115, 116, 315, 316) and/or the laser sensors (215, 216) are frosted or overiced and after confirming that the pressure sensor (15, 16, 115, 116, 315, 316) and/or laser sensor (215, 216) being checked is frosted or icy, their defrosting process is started.

6. The method for detecting overicing of heat exchanger according to claim 5, **characterised in that** the pressure sensors (15, 16, 115, 116, 315, 316) are cyclically defrosted.

## Patentansprüche

1. Vorrichtung (1) zum Erfassen einer Vereisung eines Wärmetauschers (5, 505, 605) von Wärmekraftmaschinen (20, 520, 620), die mit einem Abtausystem (30, 530, 630) von Elementen des Wärmetauschers (5, 505, 605), die von einem Stromversorgungs- und Steuersystem (40) gesteuert werden, kommunizieren, wobei die Vorrichtung (1) umfasst
Vereisungssensoren (10) der Elementen (6) des Wärmetauschers (5, 505, 605), die in einem Raum (3) angeordnet sind, in dem die Elemente (6) des Wärmetauschers (5, 505, 605) angeordnet sind und um die oder zwischen denen ein strömendes Medium (4) strömt, das von einer Einströmseite (8) des strömenden Mediums (4) zu einer Ausströmseite (9) des strömenden Mediums (4) einströmt, wobei die Vereisungssensoren (10) umfassen
einen Einströmdrucksensor (15, 115, 315), der an der Einströmseite (8) des zwischen den Elementen (6) des Wärmetauschers (5, 505, 605) einströmenden strömenden Mediums (4) angeordnet ist und einen Druck an der Einströmseite (8) misst und einen Ausgang für den Einströmdruck des strömenden Mediums (4) aufweist,
einen Ausströmdrucksensor (16, 116, 316), der an der Ausströmseite (9) des zwischen den Elementen (6) des Wärmetauschers (5, 505, 605) ausströmenden strömenden Mediums (4) angeordnet ist und einen Druck an der Ausströmseite (9) misst und einen Ausgang für den Ausströmdruck des strömenden Mediums (4) aufweist,
eine Druckdifferenzmessvorrichtung (11) mit
einem ersten Druckeingang (12), der mit dem Ausgang des Einströmdruckfühlers (15, 115, 315) verbunden ist, der den Wert des Einströmdrucks (p₁) des strömenden Mediums (4) liefert, und
einem zweiten Druckeingang (13), der mit dem Ausgang des Ausströmdrucksensors (16, 116, 316) verbunden ist, der den Wert des Ausströmdrucks (p₂) des strömenden Mediums (4) liefert,
eine Verarbeitungseinheit (18), die mit der Druckdifferenzmessvorrichtung (11) in Verbindung steht und eine Druckdifferenz (Δp) zwischen dem Ausströmdruck (p₂) und dem Einströmdruck (p₁) und einen Durchschnittswert (Δp_{avg}) der Druckdifferenz berechnet, wobei die Verarbeitungseinheit (18) so konfiguriert ist, dass sie ein Abtausignal an das Stromversorgungs- und Steuersystem (40) sendet, wenn der Durchschnittswert (Δp_{avg}) der Druckdifferenz größer ist als ein oberer zulässiger Wert der Druckdifferenz (Δpₛₚ), um den Abtauvorgang zu starten, bis der Mittelwert (Δp_{avg}) der Druckdifferenz kleiner ist als der voreingestellte untere Wert der Druckdifferenz (Δpₛₚ), **dadurch gekennzeichnet, dass** mindestens ein optischer Empfangssensor (215) und mindestens ein optischer Sendesensor (216) in derselben Linie angeordnet sind, wobei der optische Sendesensor (216) einen Lichtstrahl erzeugt, der durch den Raum zwischen Elementen (6) des Wärmetauschers (5, 505, 605) der Vorrichtung (1) in Richtung des optischen Empfangssensors (215) strömt,
wobei die Verarbeitungseinheit (18) ferner mit mindestens einem optischen Empfangssensor (215) und mindestens einem optischen Sendesensor (216) kommuniziert, wobei mindestens ein optischer Empfangssensor (215) und mindestens ein optischer Sendesensor (216) Lasersensoren sind, in einem Gehäuse (171) mindestens eines der Lasersensoren (215, 216) an einer Vorderseite (177) des Lasersensors (215, 216) eine interne Heizvorrichtung (17) vorgesehen ist, hinter der, von der Vorderseite (177) aus gesehen, ein Sensorelement (172) angeordnet ist, das einen Wert der Lichtintensität E misst und mit dem Stromversorgungs- und Steuersystem (40) kommuniziert.

2. Vorrichtung (1) zum Erfassen einer Vereisung des Wärmetauschers (5, 505, 605) der Wärmemaschinen (20, 520, 620) gemäß Anspruch 1, **dadurch gekennzeichnet, dass** der optische Empfangssensor (215) und der optische Sendesensor (216) mit den Drucksensoren (15, 16) integriert sind und kompakte Sensoren (315, 316) bilden, wobei der optische Empfangssensor (215) und der optische Sendesensor (216) in Strömungsrichtung des strömenden Mediums (4) gesehen beidseitig des Wärmetauschers austauschbar mit den Drucksensoren (15, 16) integrierbar sind.

3. Vorrichtung (1) zum Erfassen einer Vereisung des Wärmetauschers (5, 505, 605) der Wärmemaschinen (20, 520, 620) gemäß Anspruch 1 oder 2, **dadurch gekennzeichnet, dass** der Wärmetauscher oder die Wärmetauscher mindestens einer aus einem Lamellenwärmetauscher (5, 505, 605), einem Rohrwärmetauscher (505) oder einem Mikrokanalwärmetauscher (605) oder Kombinationen davon ausgewählt ist oder sind.

4. Vorrichtung (1) zum Erfassen einer Vereisung des Wärmetauschers (5, 505, 605) der Wärmemaschinen (20, 520, 620) gemäß einem der Ansprüche 1 bis 3, **dadurch gekennzeichnet, dass** in einem Gehäuse (171) des Drucksensors (15, 16, 115, 116, 315, 316) an einer Vorderseite (177) des Drucksensors (15, 16, 115, 116, 315, 316) eine interne Heizung (17) vorgesehen ist, hinter der, von der Vorderseite (177) ausgesehen, ein Sensorelement (172) angeordnet ist, das die Druckkraft des Mediums (4) proportional zu einer linearen Geschwindigkeit (v₁, v₂) des um den Drucksensor (15, 16, 115, 116, 315, 316) strömenden Mediums und mit dem Energieversorgungs- und Steuersystem (40) in Verbindung steht.

5. Verfahren zum Erfassen einer Vereisung des Wärmetauschers der Wärmemaschinen (20, 520, 620) mittels einer Vorrichtung (1) gemäß Anspruch 1 bis 4 und der in Verbindung mit einem Abtausystem (30, 320, 320) von Elementen des Wärmetauschers (5, 505, 605) durch das Stromversorgungs- und Steuersystem (40) steht, wobei
nach Feststellung, dass der Mittelwert (Δp_{avg}) der Druckdifferenz kleiner als der voreingestellte untere Wert der Druckdifferenz (Δpₛₚ) ist, die Zeitgeber zurückgesetzt werden und eine Messung der verstrichenen Zeit beginnt, nachdem die Wärmekraftmaschine wieder in einen Standardbetriebsmodus der Wärmekraftmaschine geschaltet wurde, **dadurch gekennzeichnet, dass** vor dem Bereitstellen von Messungen des Drucks (p₁) mittels des an der Einströmseite (8) des zwischen den Elementen (6) des Wärmetauschers (5, 505, 605) einströmenden strömenden Mediums (4) angeordneten Einströmdrucksensors (15, 115, 315) und des Drucks (p₂) mittels des an der Ausströmseite (9) des aus dem Raum zwischen den Elementen (6) des Wärmetauschers (5, 505, 605) ausströmenden strömenden Mediums (4) angeordneten Ausströmdrucksensors (16, 116, 316), wird überprüft, ob die Drucksensoren (15, 16, 115, 116, 315, 316) und/oder die Lasersensoren (215, 216) überfrostet oder vereist sind, nachdem bestätigt wurde, dass der zu überprüfende Drucksensor (15, 16, 115, 116, 315, 316) und/oder Lasersensor (215, 216) überfrostet oder vereist ist, wird deren Abtauvorgang gestartet.

6. Verfahren zum Erfassen einer Vereisung eines Wärmetauschers gemäß Anspruch 5, **dadurch gekennzeichnet, dass** die Drucksensoren (15, 16, 115, 116, 315, 316) zyklisch abgetaut werden.

## Revendications

1. Dispositif (1) de détection d'un givrage excessif d'un échangeur de chaleur (5, 505, 605) de machines thermiques (20, 520, 620) communiquant avec un système de dégivrage (30, 530, 630) d'éléments de l'échangeur de chaleur (5, 505, 605) commandé par un système d'alimentation et de commande (40), le dispositif (1) comprenant
des capteurs de givrage (10) des éléments (6) de l'échangeur de chaleur (5, 505, 605) situés dans un espace (3) dans lequel sont situés les éléments (6) de l'échangeur de chaleur (5, 505, 605) et autour desquels, ou entre lesquels, s'écoule un fluide en écoulement (4), entrant par un côté entrée (8) du fluide en écoulement (4) vers un côté sortie (9) du fluide (4), tandis que les capteurs de givrage (10) comprennent
un capteur de pression d'entrée (15, 115, 315) situé du côté entrée (8) du fluide en écoulement (4) entrant entre les éléments (6) de l'échangeur de chaleur (5, 505, 605) et mesurant une pression sur le côté entrée (8) et ayant une sortie de la pression d'entrée du fluide en écoulement (4),
un capteur de pression de sortie (16, 116, 316) situé du côté sortie (9) du fluide en écoulement (4) sortant entre les éléments (6) de l'échangeur de chaleur (5, 505, 605) et mesurant une pression sur le côté sortie (9) et ayant une sortie de la pression de sortie du fluide en écoulement (4),
un dispositif de mesure de différence de pression (11) comprenant
une première entrée de pression (12) communiquant avec la sortie du capteur de pression d'entrée (15, 115, 315) donnant la valeur de la pression d'entrée (p₁) du fluide en écoulement (4), et
une deuxième entrée de pression (13) communiquant avec la sortie du capteur de pression de sortie (16, 116, 316) donnant la valeur de la pression de sortie (p₂) du fluide en écoulement (4),
une unité de traitement (18) communiquant avec le dispositif de mesure de la différence de pression (11) et calculant une différence de pression (Δp) entre la pression de sortie (p₂) et la pression d'entrée (p₁) et calculant une valeur moyenne (Δp_{avg}) de la différence de pression, tandis que l'unité de traitement (18) est configurée pour transmettre un signal de dégivrage au système d'alimentation et de commande (40) dans le cas où la valeur moyenne (Δp_{avg}) de la différence de pression est supérieure à une valeur maximale admissible de la différence de pression (Δpₛₚ) pour démarrer le processus de dégivrage jusqu'à ce que la valeur moyenne (Δp_{avg}) de la différence de pression soit inférieure à la valeur minimale prédéfinie de la différence de pression (Δpₛₚ), **caractérisé par** d'au moins un capteur optique récepteur (215) et d'au moins un capteur optique émetteur (216), disposés sur la même ligne, tandis que le capteur optique émetteur (216) générant un flux de lumière traversant l'espace entre les éléments (6) de l'échangeur de chaleur (5, 505, 605) du dispositif (1) en direction du capteur optique récepteur (215),
l'unité de traitement (18) communiquant en outre avec au moins un capteur optique récepteur (215) et au moins un capteur optique émetteur (216), tandis que au moins un capteur optique récepteur (215) et au moins un capteur optique émetteur (216) sont des capteurs laser dans un boîtier (171) d'au moins un des capteurs laser (215, 216) à une face avant (177) des capteurs laser (215, 216) se trouve un dispositif de chauffage interne (17) derrière lequel, vu de la face avant (177), se trouve un élément capteur (172) mesurant une valeur d'intensité E de la lumière et communiquant avec le système d'alimentation et de commande (40).

2. Dispositif (1) de détection d'un givrage excessif de l'échangeur de chaleur (5, 505, 605) des machines thermiques (20, 520, 620) selon la revendication 1, **caractérisé en ce que** le capteur optique récepteur (215) et le capteur optique émetteur (216) sont intégrés aux capteurs de pression (15, 16) et forment des capteurs compacts (315, 316), tandis que le capteur optique récepteur (215) et le capteur optique émetteur (216) peuvent être intégrés de manière interchangeable avec les capteurs de pression (15, 16) des deux côtés de l'échangeur de chaleur, dans la direction d'écoulement du fluide en écoulement (4).

3. Dispositif (1) de détection d'un givrage excessif de l'échangeur de chaleur (5, 505, 605) des machines thermiques (20, 520, 620) selon la revendication 1 ou 2, **caractérisé en ce que** l'échangeur de chaleur ou les échangeurs de chaleur est ou sont au moins un élément choisi parmi un échangeur de chaleur lamellaire (5, 505, 605), un échangeur de chaleur tubulaire (505) ou un échangeur de chaleur à microcanaux (605) ou des combinaisons de ceux-ci.

4. Dispositif (1) de détection d'un givrage excessif de l'échangeur de chaleur (5, 505, 605) des machines thermiques (20, 520, 620) selon l'une des revendications 1 à 3, **caractérisé en ce que**, dans un boîtier (171) du capteur de pression (15, 16, 115, 116, 315, 316) sur une face avant (177) du capteur de pression (15, 16, 115, 116, 315, 316), il y a un dispositif de chauffage interne (17) derrière lequel, vu de la face avant (177), se trouve un élément capteur (172) mesurant la force de pression du fluide (4) proportionnellement à une vitesse linéaire (v₁, v₂) du fluide s'écoulant autour du capteur de pression (15, 16, 115, 116, 315, 316) et communiquant avec le système d'alimentation et de commande (40).

5. Procédé de détection d'un givrage excessif d'un échangeur de chaleur de machines thermiques (20, 520, 620) au moyen du dispositif (1) selon les revendications 1 à 4 et communiquant avec un système de dégivrage (30, 320, 320) des éléments de l'échangeur de chaleur (5, 505, 605) via le système d'alimentation et de commande (40), tandis que
après avoir constaté que la valeur moyenne (Δp_{avg}) de la différence de pression est inférieure à la valeur inférieure prédéfinie de la différence de pression (Δpₛₚ), les minuteries sont réinitialisées et une mesure du temps écoulé commence après que la machine thermique a été ramenée en mode de fonctionnement standard de la machine thermique, **caractérisé en ce que** l' avant de fournir des mesures de la pression (p₁) au moyen du capteur de pression d'entrée (15, 115, 315) situé sur le côté d'entrée (8) du fluide en écoulement (4) s'écoulant entre les éléments (6) de l'échangeur de chaleur (5, 505, 605) et la pression (p₂) au moyen du capteur de pression de sortie (16, 116, 316) situé sur le côté de sortie (9) du fluide en écoulement (4) sortant de l'espace entre les éléments (6) de l'échangeur de chaleur (5, 505, 605) pour vérifier si les capteurs de pression (15, 16, 115, 116, 315, 316) et/ou les capteurs laser (215, 216) sont givrés ou recouverts de glace après avoir confirmé que le capteur de pression (15, 16, 115, 116, 315, 316) et/ou le capteur laser (215, 216) contrôlé est givré ou gelé, leur processus de dégivrage est lancé.

6. Procédé de détection d'un givrage excessif d'un échangeur de chaleur selon la revendication 5, **caractérisé en ce que** les capteurs de pression (15, 16, 115, 116, 315, 316) sont dégivrés de manière cyclique.
